(19) Europäisches Patentamt

European Patent Office

Office européen des brevets

(11) **EP 1 715 254 A1**

(12) **EUROPEAN PATENT APPLICATION**

(43) Date of publication:
25.10.2006 Bulletin 2006/43

(51) Int Cl.:
*F24D 19/10* (2006.01)   *F24D 3/12* (2006.01)

(21) Application number: 05008821.0

(22) Date of filing: 22.04.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(71) Applicant: Rappoport, Franklin
8600 Dübendorf (CH)

(72) Inventor: Rappoport, Franklin
8600 Dübendorf (CH)

(54) **Predictive heating control system based on meteorological forecast-heating information system**

(57)     The predictive heating control and "on-line" information system

• spares heating energy in a building with a relevant inertia as a building with under-floor heating by using meteorological forecast

• improves at the same time the comfort of in-floor heated buildings

• provides a better controlling by doubling important controlling components

• improves the information and communication among the inhabitants and all persons concerned by maintenance. This information relates to energy consumption, comfort and facilitates the discovery of thermo hydraulical unbalance in the building.

• supports ecology by solving quicker than a current heating control system the heating problem of a community of inhabitants sharing a building

• makes responsible every inhabitant of this community. For instance when improvements of isolation are brought to the building

The inputs, outputs, algorithms, memorization of data are carried out by software, in the last state of the technique by a computer using a securised dynamical Internet page accessible by every allowed person. Every information is communicated on a central screen, by dynamical internet page and by email to the responsible persons (administration, maintenance specialist, owners/tenants)

| | |
|---|---|
| 1 | Generator |
| 2 | In-floor emitters |
| 3 | Outside sensor |
| 4 | Inlet sensor |
| 5 | Security Thermostat |
| 6 | Heating Control computer |
| 7 | Three ways mixing motirized valve |
| 8 | Fixed bypassed |
| 9 | Circulation pump |
| 10 | Remote site for meteorological forecast |
| 11 | Remote users |
| 12 | Connection of 6) with 10), 11) and 14) |
| 13 | Optional screen and/or Optional Keyboard |
| 14 | Site for dynamic code and database |

Fig 1 Predictive heating control for an in-floor heating

EP 1 715 254 A1

**Description**

The current invention concerns a predictive heating control (PHC) acting on a three-ways mixing valve. A three-ways mixing valves allows to vary the inlet temperature Tv of the heating water in the emittors making mixtures between the water coming from the generator (for instance the boiler) and the return water of temperature Tr of the transmitter. The calculation in conventional heating control (CHC) of the inlet water allows

- when the **inertia** which is the average time span the heating energy needs to implement inside the building is small.
- when the heating circuits are thermo hydraulically **balanced**

a satisfying **comfort** and a satisfying **energy consumption** for the heating of the building.

A CHC does not take account that of inertia for the case an under-floor heating where the inertia is sometimes greater that the meteorological changes of temperature. It does not take account of thermo hydraulical balance

It takes account of the inertia calculating the inlet temperature with four entries:

1. The first parameter entry called "inertia"
2. The second entry is the weather forecasts TaM(t) of temperature over the inertia plus a time span posterior to the inertia and capable of energy contribution. TaM(t) allows a current theoretical temperature Tt to be defined
3. The third entry is the outside temperature Ta. This entry is necessary

- when the second entry cannot be provided by the meteorological station
- to fit the meteorological temperature to the outside temperature measured by sensor
- to check that the outside temperature sensor is correctly working. This check brings an added value of the PHC. It is done by comparing Ta and Tt within tolerance

4. The curves $Tv_i = Tv_i(Ta)$ for determination of the inlet temperature in function of the temperature Tx. The curves with a low, middle and high index "i" are respectively for under-floor heating, heating by radiators and heating by jet.

The algorithm determinates TaMi and the inlet temperature $Tv = Tv_{phc}(TaMi)$ which allows to counter to frequent and instable meteorological changes. The changes of temperature being often quicker than the inertia proper to an under-floor heating.

The algorithm of a PHC improves the comfort towards a CHC. The determination of Tv in a CHC is based on an algorithm the only two only parameters of which are the outside temperature Ta and the curves $Tv = Tv_{chc}(Ta)$, where the curve $Tv_{chc}(Ta)$ is below the curve $Tv_{phc}(Ta)$. The reasons are that the user of a CHC needs to add heating energy to counter "inertia" to avoid cold time spans .The differences of the effective room temperatures $Te_i$ to the wished $Tp_i$ are evaluated for a CHC to be $Te_i = Tp_i +/- 4 °C$

The PHC avoids the implicit wasting of **energy** of a CHC, the quotient of which being calculated by the formula « CorrPHC-CHC » over a time span Dt(te,ts). The formula « CorrPHC-CHC » is when the flowrates of the heating waters inputted and outputted by the three-ways mixing valves have not changed during the considered time spans.

The PHC is capable to memorize at discrete times t the outside temperature Ta(t), the theoretical outside temperature provided by the meteorological forecast TaMi(t-ti), the inlet temperature Tv(t), the return temperature Tr(t), the transmitter temperature Th(t), any optional fuel Cf(t), gas Cg(t), electricity Cf(t), input Ci(t), output Co(t) warmth counters and any other meteorological stochastic data as wind W(t), as sunning S(t), as humidity, H(t) etc...

An algorithm analyzing the memorized data allows fair comparisons between two time spans Dt1(te1,ts1) and Dt2(te2,ts2). Typical comparisons are between time spans of two different years or the same year. A similar algorithm allows to control of the heating « on line » and « off line ».The "DegreeSeconds" for a PHC being defined as

$$\text{tsecCelsius\_PHC} := \int_{ts+ti}^{te+ti} (Tv\_Phc(TaMi(t) - Tr(t+ti))\ dt$$

The isolation constant being defined as U_Value(ts,te) [W/m2 °C] the correction formula to take account of isolation changes (U_Value) or time span differences

$$\left| \text{CorrPHC} := \frac{Dt2}{Dt1} \cdot \frac{\text{tsecCelsius\_PHC2}(ti)}{\text{tsecCelsius\_PHC1}(ti)} \cdot \frac{\text{U\_Value2}}{\text{U\_Value1}} \right|$$

Comparative theoretical tests of temperature between the PHC and the CHC can be carried out allows. The "DegreeSeconds" for a CHC being defined as

$$\text{tsecCelsius\_CHC} := \int_{ts}^{te} (\text{Tv\_Chc}(\text{Ta}(t) - \text{Tr}(t))\, dt$$

The formula to determinate the economy of energy in percent is

$$\text{CorrCHC} := \frac{\text{tsecCelsius\_PHC}(ti)}{\text{tsecCelsius\_CHC}(ti)}$$

The PHC is capable through an expert system based on the data ($Te_i$ $Tp_i$) for selected rooms to improve the initial set value of inertia.

The PHC is capable to use the memorized data of an optional energy counter, for instance Cg(t) to carry out "absolute" comparisons of consumption of energy.

The PHC is capable to memorize the changes of isolation carried out on the isolation of the building to be heated and to take account of it in the comparisons in temperature and/or in energy

The PHC is capable to communicate with every user by an (SKI) constituted of an optional screen S an optional keyboard K, a compulsory dynamic internet page I: (called together (SKI)) the current state of the heating, the meteorological data of the location of the building, etc..

In case of heating anomaly the PHC informs by email the concerned persons (CVH) : heating specialist, administrator, caretaker, ,authorities etc..

The PHC is capable to memorize all the responsible persons (RAP) of each flat of the heated building and for each room of every flat the wished temperature $Tp_i$ and the current temperature $Te_i$. Every RAP is capable by the SKI to register (and memorize) these 2 data. The PHC is able to inform the CVH and the RAP on the heating satisfaction. $Tp_i$ can be inputted manually by SKI in the PHC or automatically from the readings of a room temperature sensor connected to the PHC.

The PHC is capable to memorize for each heating tap in a flat opening or closing the heating circuit to heated surfaces indexed by "s" inside the building the aperture of the tap $Oc_s$. Every RAP is capable by the SKI to register (and memorize) this data. $Oc_s$ can be inputted manually by SKI in the PHC or automatically from the readings of a tap numerical tap connected to the PHC

The set of data $Tp_i$, $Te_i$ and $Oc_s$ provides the information necessary to the PHC to confirm the occurrence of thermo hydraulical unbalance. This characteristic was not included in a CHC.

The PHC allows to register via SKI and memorize the time spans when a RAP can switch on/switch off its heating totally or per room at a time of the day and to use this memorization to close/open the radiators and under floor conduits partially or totally.

The communication for meteorological forecast, SKI inputs and outputs, algorithms, the memorization of data are made by software.

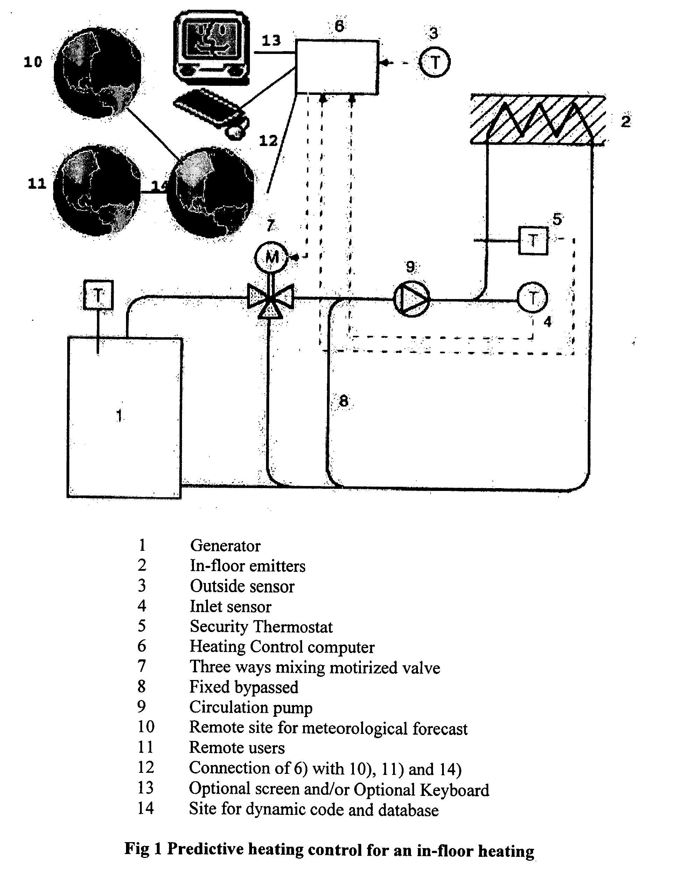

The first diagram **(Fig.1)** describes a PHC of an under-floor heating. The items (1) to (9) are the same as for a CHC and will not be further described.

(6) represents the heat control computer of the PHC where different dynamic web codes and a local non permanent database situated in the central memory needed for the PHC are run. (6) has its own inputting possibility and its own display.

(14) symbolizes an internet site where the dynamic internet codes mentioned above and a permanent database necessary for the PHC are stored.

(6) is capable to communicate with the external world "on-line" through dynamic web pages located in (14) or optional keyboard/or and screen (13). One of the dynamic web codes stored in (14) and run in (6) to download the meteorological forecast from the meteorological site (10) by internet, telephony, cable and satellite, network, etc...

The computer of connected users are symbolically represented by (11)- They use a second dynamic web code stored in (14). The information data flows in both direction from (11) to (14).

Notice that the SKI is constituted by (11) and (13). The web program intelligence run in (6) can be distributed in a remote computer connected to (6) and to (14). The realisation of items (6) and (10) to (14) can be very different in the future. They are therefore only logical items.

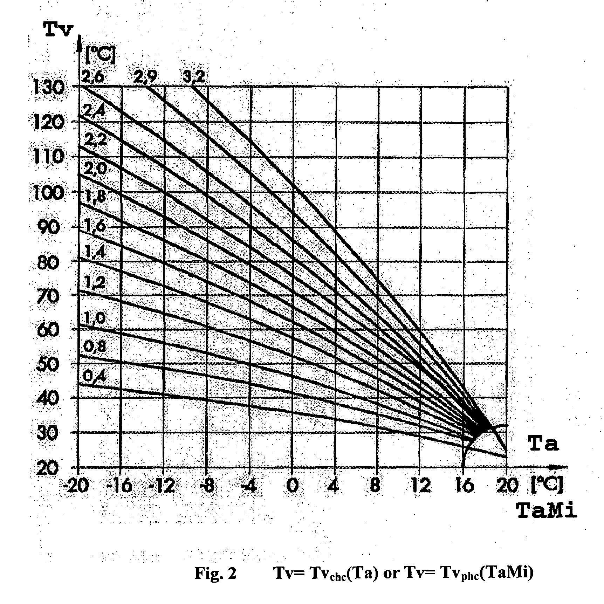

The second diagram **(Fig.2)** represents inlet temperatures curves in function of the outside temperature $Tv=Tv_{chc}(Ta)$ for a CHC or a $Tv=Tv_{phc}(TaMi)$ for a PHC. The inlet curves can vary according to the thermal characteristic of the building and other reasons. They belong rather to a CHC and are not part of the patent.

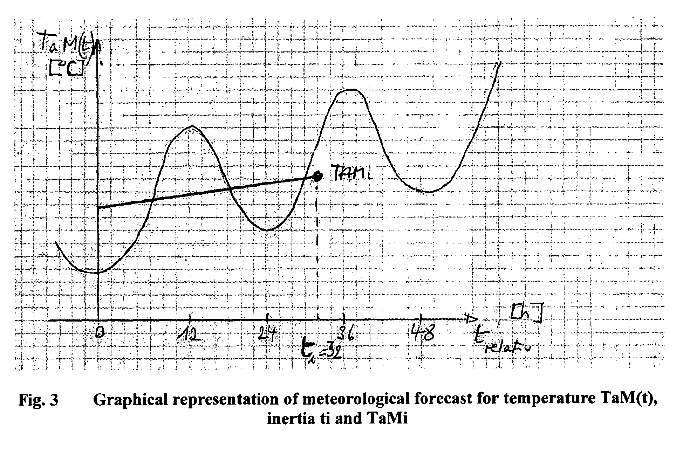

The third diagram **(Fig.3)** gives an example of meteorological forecast for temperature TaM(t). The inertia represented by ti and TaMi are both drawn. TaMi is calculated by a weighting function $g_j(P(TaM(t_j), TV_{phc}(t_j))$ and a linear regression of the forecast temperatures TaM $(t_j)$ for discrete times $t_j$. The function $P(TaM(t_j))$ being the probability of correctness of TaM($t_j$).

## Claims

1. The PHC improves the comfort of an in-floor heated building and allows to regulate the room temperature with a satisfying precision even in case of meteorological changes at the place where the building is situated rapid, forecasted and frequent of outside temperature.
   The meteorological changes of temperature are considered
   as *rapid* if their time span is shorter that the inertia
   as *forecast* if their probability of correctness in the first 24 hours the second 24 hours, the third 24 hours is not too low : for instance 90%, 85%, 80%.

2. The PHC improves the energy consumption and comfort of a building and allows the control of a room temperature with a satisfying precision. The arguments and the justifications are the same as for the first claim.

3. An algorithm gives the improvement in the energy consumption expressed as percentage of a PHC towards a CHC.

4. The PHC is capable to carry out the control of the quality of the heating « on line » and « off line » on the base of consumed energy. It uses an algorithm which gives the improvement in the energy consumption expressed as percentage of a PHC considered on two different time spans

5. The PHC is capable by a expert system to improve the initial entry of inertia

6. The PHC is capable to read « on-line » an energy counter (fuel,gas,warmth, electricity, etc..) and to carry out fair "absolute" comparisons of energy consumption taking account of the weather changes between different periods or heating seasons

7. The PHC is capable to memorize the changes of isolation carried out on the isolation of the building to be heated and to take account of them in the comparisons in temperature and/or in energy

8. The PHC is capable of communicate to every user by dynamic internet page and screen the current state of the heating, the meteorological data of the place where the building is located, etc..

9. In case of technical problems, of anomaly of heating the PHC informs by email the persons concerned by maintenance like heating specialist, administrator, caretaker, etc..

10. Every owner/tenant can memorize the wished temperature and the current temperature of every room of each flat to facilitate the diagnosis of thermo hydraulical unbalance in the building. Each inhabitant or concerned person is capable to register "on line" the data. The PHC is able to inform the maintenance and the inhabitants on the heating.

11. The PHC decides to switch on and off the heating of the building when the meteorological forecast taking account of the inertia of the building rates to do so.

12. The PHC allows to register the periods when an owner/tenant can switch on/switch off its heating totally or by room at a time of the day and to use this memorization to close/open the radiators and under floor conduits partially or totally.

13. The PHC decides that the outside temperature sensor is deficient when the outside temperature sensor and the meteorological forecast temperature are not equal under tolerance

| 1 | Generator |
|----|-----------|
| 2 | In-floor emitters |
| 3 | Outside sensor |
| 4 | Inlet sensor |
| 5 | Security Thermostat |
| 6 | Heating Control computer |
| 7 | Three ways mixing motirized valve |
| 8 | Fixed bypassed |
| 9 | Circulation pump |
| 10 | Remote site for meteorological forecast |
| 11 | Remote users |
| 12 | Connection of 6) with 10), 11) and 14) |
| 13 | Optional screen and/or Optional Keyboard |
| 14 | Site for dynamic code and database |

**Fig 1 Predictive heating control for an in-floor heating**

**Fig. 2**    $Tv = Tv_{chc}(Ta)$ or $Tv = Tv_{phc}(TaMi)$

**Fig. 3** Graphical representation of meteorological forecast for temperature TaM(t),
inertia ti and TaMi

**EP 1 715 254 A1**

European Patent Office

**EUROPEAN SEARCH REPORT**

Application Number

EP 05 00 8821

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 198 31 127 A1 (HELMUT BAELZ GMBH) 15 March 2001 (2001-03-15) * the whole document * ----- | 1-13 | F24D19/10 F24D3/12 |
| X | WO 2004/025189 A (BARIX AG; RIETSCHEL, JOHANNES) 25 March 2004 (2004-03-25) * the whole document * ----- | 1-13 | |
| X | US 4 921 163 A (VIESSMANN ET AL) 1 May 1990 (1990-05-01) * the whole document * ----- | 1 | |
| X | DE 102 29 222 A1 (ELKA AG, ROTKREUZ) 22 January 2004 (2004-01-22) * the whole document * ----- | 9 | |
| X | US 6 868 293 B1 (SCHURR ALLAN J ET AL) 15 March 2005 (2005-03-15) * the whole document * ----- | 10 | |
| A | EP 0 548 389 A (FIEDRICH, JOACHIM) 30 June 1993 (1993-06-30) * the whole document * ----- | 1 | TECHNICAL FIELDS SEARCHED (Int.Cl.7) F24D |

The present search report has been drawn up for all claims

| Place of search | Date of completion of the search | Examiner |
|---|---|---|
| Munich | 15 September 2005 | Arndt, M |

EPO FORM 1503 03.82 (P04C01)

## ANNEX TO THE EUROPEAN SEARCH REPORT
## ON EUROPEAN PATENT APPLICATION NO.

EP 05 00 8821

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2005

| Patent document cited in search report | | Publication date | Patent family member(s) | | Publication date |
|---|---|---|---|---|---|
| DE 19831127 | A1 | 15-03-2001 | NONE | | |
| WO 2004025189 | A | 25-03-2004 | AU | 2003257357 A1 | 30-04-2004 |
| | | | CA | 2497839 A1 | 25-03-2004 |
| | | | EP | 1537366 A1 | 08-06-2005 |
| US 4921163 | A | 01-05-1990 | CA | 1296406 C | 25-02-1992 |
| | | | DE | 3687580 D1 | 04-03-1993 |
| | | | EP | 0260343 A2 | 23-03-1988 |
| | | | ES | 2038586 T3 | 01-08-1993 |
| | | | JP | 2666059 B2 | 22-10-1997 |
| | | | JP | 63083536 A | 14-04-1988 |
| DE 10229222 | A1 | 22-01-2004 | NONE | | |
| US 6868293 | B1 | 15-03-2005 | AU | 1342802 A | 08-04-2002 |
| | | | WO | 0227687 A1 | 04-04-2002 |
| EP 0548389 | A | 30-06-1993 | AT | 156582 T | 15-08-1997 |
| | | | DE | 69127203 D1 | 11-09-1997 |
| | | | DE | 69127203 T2 | 26-02-1998 |

EPO FORM P0459

For more details about this annex : see Official Journal of the European Patent Office, No. 12/82